# EUROPEAN PATENT SPECIFICATION

(11) **EP 4 247 535 B1**
(45) Date of publication and mention of the grant of the patent: **13.05.2026**
(21) Application number: 21895236.4
(22) Date of filing: 22.11.2021
(51) Int. Cl.: B01J 12/00, B01J 19/12

(54) **THERMAL REACTOR COMPRISING A GAS PERMEABLE CAGE ARRANGED TO INFLUENCE A FLOW PATH OF GAS**
THERMISCHER REAKTOR MIT EINEM GASDURCHLÄSSIGEN KÄFIG ZUR BEEINFLUSSUNG EINES GASDURCHFLUSSWEGES
RÉACTEUR THERMIQUE COMPRENANT UNE CAGE PERMÉABLE AUX GAZ AGENCÉE POUR INFLUENCER UN TRAJET D'ÉCOULEMENT DE GAZ

(30) Priority: 23.11.2020 SE 2051365
(43) Date of publication of application: 27.09.2023
(73) Proprietor: Nitrocapt AB, 756 51 Uppsala (SE)
(72) Inventor: FORSBERG, Gustaf, 749 60 Örsundsbro (SE); BAELING, Peter, 178 38 Ekerö (SE); ANDERSSON, Ronnie, 431 69 Mölndal (SE)
(74) Representative: Kransell & Wennborg KB
(86) International application number: PCT/SE2021/051160
(87) International publication number: WO 2022/108514

(56) References cited:
- WO-A1-00/71866
- WO-A1-00/71866
- KR-A- 20090 110 060
- US-A- 4 264 750
- US-A- 4 643 890
- US-A1- 2003 024 806
- US-A1- 2003 024 806
- US-A1- 2005 028 874
- US-A1- 2018 243 713

## Description

### TECHNICAL FIELD

The present disclosure relates to the field of reaction chambers and in particular to thermal reaction chambers for gaseous thermal reactions.

### BACKGROUND

Thermal reactors, such as plasma reactors, are used to react gases into forming different compounds in various fields, such as fuel conversion and removal of pollutants from gas streams. A discharge or excitation by electromagnetic waves, such as radiofrequency or microwaves, of high intensity is applied to a fluid containing the substances to be treated causing decomposition, and possibly recombination, of substances.

There are different demands on the thermal reactor depending on the type of thermal reactions or plasma that can vary in both temperature and intensity. Consequently, different reactor chamber designs for these reactions exist today, such as tubular reactors allowing the fluid to pass through the plasma arranged in the middle of the tube.

One plasma reactor is presented in US2003/0024806 A1 wherein a plasma is combined with comminution means to provide for enhanced angular momentum within the chemical reactor. Another plasma reactor is known from WO 00/71866 A1. US 2018/243713 A1 describes a thermal reactor with a vessel and a cage arranged inside the vessel.

High temperature thermal reactions such as plasmas are energy demanding and in order to ensure satisfactory reaction yield in combination with energy efficiency there are improvements to be made over prior art.

### SUMMARY

The present disclosure aims to provide a thermal reactor with satisfactory reaction yield in combination with energy efficiency. The inventors have realized that such a reactor should overcome the majority, preferably all, of the following problems:
a) that the reacting gas is diluted when cold gas is mixed into the hot gas causing a non-uniformity and inefficiency of the reaction
b) convection of hot gas from the reaction area and heat irradiation from the reaction area giving rise to high temperatures on the surface of the reaction chamber wall, that i) can be detrimental to the solid materials of the reactor wall, particularly for applications made at other pressures than the atmospheric pressure which is challenging for the mechanic stability of the reactor vessel, and that ii) can lead to undesirable heat leakage.
c) sub-optimal residence time distribution. As a consequence, there is a risk that there will not be enough time for the aimed reaction to take place throughout the fluid, or reversely that the reaction chamber needs excessive dimensions in order to avoid such insufficient residence time.
d) by-pass of unreacted gas beside the reaction zone, leading to undesired dilution of the reaction products and a waste of heat to unreacted gas.

Accordingly, the present disclosure provides the following aspects and embodiments:

The invention is defined in claim 1 as a thermal reactor (100) comprising:
a vessel (101), said vessel comprising:
   a gas inlet (102),
   an outlet (103),
   a gas permeable cage (104) arranged in the vessel (101), and in fluid connection to the gas inlet (102), wherein the vessel (101) and the cage (104) are provided with a mutual gas outlet (103), and
   temperature generating means (105;105') arranged to create a thermal reaction zone (106) within the cage (104),
wherein the cage (104) is provided with holes (107), and
wherein a first subset of the holes (107') is arranged along at least a portion of a first circumferential surface (110) of the cage (104) and a second subset of the holes (107") is arranged along at least a portion of a second circumferential surface (111) of the cage (104),
wherein the first (110) and second (111) circumferential surfaces are offset and non-parallel,
and the first subset of holes (107') and the second subset of holes (107") are mutually distinct, and
wherein the cage (104) is spaced from the walls of the vessel (101),
wherein the thermal reactor is a plasma reactor (100), the thermal reaction zone is a plasma zone (106) and the temperature generating means (105;105') are plasma generating means (105;105').

In one embodiment, the vessel (101) is a pressurized vessel arranged to operate at different pressure than atmospheric pressure, preferably a pressure being higher than atmospheric pressure.

In one embodiment, the vessel (101) further comprises cooling means (108).

In one embodiment, the cooling means (108) are arranged in the outlet (103) or in direct connection to the outlet (103).

In one embodiment, the cage (104) is porous.

In one embodiment, the cage (104) is a metal cage.

In one embodiment, the cage (104) is a ceramic cage.

In one embodiment, the cage (104) is made of a non-metallic conductive material, such as graphene or reduced graphene oxide or graphene-metal composites.

In one embodiment, the temperature generating means (105; 105') are electrodes.

In one embodiment, the temperature generating means (105; 105') are antennas.

In one embodiment,the thermal reaction zone (106) is produced using electromagnetic waves of radio frequency or microwaves.

In one embodiment, at least 80% of the holes (107), such as at least 90% of the holes (107), have a central axis (Y) that is angled at an angle α being between 80°-100° relative to a tangential plane (X) at an outer surface of the cage around respective hole (107).

In one embodiment, the cage (104) has rounded edges.

In one embodiment, the cage (104) is an ellipsoid.

In one embodiment, the cage (104) is a cylinder.

In one embodiment, the cage (104) has a central longitudinal axis around which the cage (104) is symmetrical.

In one embodiment, the surface geometry of the cage (104) can be described by a continuous function.

In one embodiment, wherein the derivative of the continuous function describing the surface geometry of the cage (104) is a continuous function.

In one embodiment, the second derivative of the continuous function describing the surface geometry of the cage (104) is a continuous function.

In one embodiment, wherein at least 30%, such as at least 40%, such as at least 50%, such as at least 60%, such as at least 70%, such as at least 80%, such as at least 90%, of the surface of the cage (104) is provided with holes (107).

In one embodiment, the entire surface of the cage (104) is provided with holes (107).

In one embodiment, wherein the holes (107) are substantially circular.

In one embodiment, the gas permeable cage (104) is a first gas permeable cage (104-1) and the thermal reactor further comprises:
a second gas permeable cage (104-2), wherein
the holes (107) of the first gas permeable cage (104-1) are first holes (107-1), and
the second gas permeable cage (104-2) is provided second holes (107-2), wherein
the second gas permeable cage (104-2) is smaller than the first gas permeable cage (104-1), so that the second gas permeable cage (104-2) is arranged inside the first gas permeable cage (104-1).

In one embodiment, the first and second holes (107-1, 107-2) of the first and second gas permeable cages (104-1, 104-2) are arranged offset so that the first and second holes (107-1, 107-2) are not aligned.

In one embodiment, the first gas permeable cage (104-1) and the second gas permeable cage (104-2) have the same geometrical shape.

The following example of a thermal reactor is not according to the invention as claimed. a thermal reactor (100) comprising a vessel (101), said vessel comprising a gas inlet (102), an outlet (103), a gas permeable cage (104), and temperature generating means (105;105') arranged to create a thermal reaction zone (106) within the cage (104), wherein
the cage is provided with holes (107), wherein
there is at least a first pressure, P1, outside the cage (104) and at least a second pressure, P2, inside the cage (104), wherein
P1 is higher than P2 so that a pressure drop is obtained over the cage wall.

### BRIEF DESCRIPTION OF THE DRAWINGS

Aspects and embodiments are now described, by way of example, with reference to the accompanying drawings, in which:
Fig 1 is a schematic image of a cross section of a thermal reactor comprising a vessel comprising a gas permeable cage made of a material transparent to radiowaves and microwaves and temperature generating means outside the cage.
Fig 2 is a schematic image of a cross section of a thermal reactor comprising cooling means.
Fig 3 is a schematic image of a cross section of a thermal reactor illustrating positioning of temperature creating means in the cage wall, which is necessary when the cage is a Faraday's cage for the radiowaves or microwaves.
Fig 4 is a schematic image of a cross section of a thermal reactor as well as an enlarged schematic image of the thermal reaction zone and cage wall.
Fig 5 is a schematic image of a cage of a thermal reactor wherein a first circumferential surface and a second circumferential surface are marked out.
Fig 6 is a schematic image of a cage of thermal reactor as well as an enlarged schematic image of a hole of the cage, wherein there is an angle between a central axis and a tangential plane at an outer surface of the cage around the hole.
Fig 7 is a schematic image of a cross section of an embodiment of the cage, wherein the cage is an ellipsoid.
Fig 8 is a schematic image of a cross section of an embodiment of the cage wherein the cage is a cylinder with rounded corners.
Fig 9 is a schematic image of a cross section of an embodiment of the cage, wherein the cage is combination of two ellipsoids with a smooth connection between the two ellipsoids.
Fig 10 is a schematic image of a cross section of an embodiment of the cage wherein the cage is two ellipsoids united by a cone through smooth connections.
Fig 11 is a schematic image of a cross section of an embodiment of the cage wherein the cage is a half ellipsoid.
Fig 12 is a schematic image of a cross section of an embodiment of a second gas permeable cage arranged a first gas permeable cage.
Fig 13 is a schematic front view of an embodiment of a second gas permeable cage arranged inside a first gas permeable cage.
Fig 14 is a schematic image of an embodiment of a zoomed-in cross section of a second gas permeable cage arranged inside a first gas permeable cage.
Fig 15 is a schematic image of a cross section of an embodiment of a third gas permeable cage arranged inside a first and a second gas permeable cage.
Fig 16 is a schematic image of a zoomed-in cross section of an embodiment of a third gas permeable cage arranged inside a first and a second gas permeable cage.

### DETAILED DESCRIPTION

As a first aspect of the present disclosure there is provided a plasma reactor as defined in claim 1 comprising:
a vessel, said vessel comprising:
a gas inlet,
an outlet,
a gas permeable cage arranged in the vessel, and in fluid connection to the gas inlet, wherein the vessel and the cage are provided with a mutual gas outlet, and
temperature generating means arranged to create a thermal reaction zone within the cage,

wherein the cage is provided with holes, and
wherein a first subset of the holes is arranged along at least a portion of a first circumferential surface of the cage and a second subset of the holes is arranged along at least a portion of a second circumferential surface of the cage,
wherein the first and second circumferential surfaces are offset and non-parallel,
and the first subset of holes and the second subset of holes are mutually distinct, and
wherein the cage (104) is spaced from the walls of the vessel (101).

The first as well as second circumferential surfaces are imaginary and are arranged along the outside of the cage. They can be imaginary arranged around the cage in any way except of being parallel and overlapping only the same holes, i.e. the holes are mutually different. For example, a cylindrical cage having one line of slits as holes does not form part of the subject matter of the first aspect of the present disclosure since, even though there can be arranged two imaginary non-parallel circumferential surfaces, the holes, i.e. slits, will not be mutually distinct since the first and second circumferential surface will include the same set of holes. It is advantageous to have more than one set of holes being mutually distinct, i.e. more than only one row of holes, since the flow on the inside of the cage is more homogenous. A more homogenous flow is better for the reaction in the thermal reaction zone as the reactants enter more evenly.

That the first subset of holes and the second subset of holes are mutually distinct means that they are not the same holes.

The holes of the cage are openings. The holes in the cage can have different geometries and can for example be circular, oval, rectangular, quadratic, slits or polygons. The holes can also have irregular shapes or have a mixture of regular shapes, such as some holes circular and some holes oval. The holes can also be a mixture of regular and irregular shapes. The holes can also be referred to as apertures. The holes can vary in size over the cage or they can be uniform. Preferably, the holes are circular. The diameter of the holes is typically less than 5 cm, such as less than 2 cm, such as less than 5 mm. The area of the holes is typically less than 20 cm², such as less than 10 cm², such as less than 20 mm².

The hole-ratio distribution (i.e. number of holes x hole surface/total surface) over the cage surface can be uniform or it can vary to create specific desired flow patterns inside the cage. Certain parts of the cage can also have fewer holes or even be closed/without holes. One example of such a case is that the part of the cage closest to the outlet of the vessel is closed so that by-passing of unreacted cold gas is reduced or avoided.

The gas inlet of the vessel is in fluid connection to the cage. The vessel and the cage are provided with a mutual gas outlet. The gas inlet typically is a part of the wall of the vessel, since the inlet and the cage are in fluid connection, gas can enter into the vessel and be directed to the cage. The gas is typically directed by an overpressure of the gas pushing it towards the cage.

The gas permeable cage provides for that there is at least a first pressure, P1, outside the cage and at least a second pressure, P2, inside the cage and that P1 is higher than P2. Thereby, a pressure gradient is present between the outside and the inside of the cage. As a consequence, the design of the gas passage through the cage allows to control the gas velocity at each point, both inside and outside of the cage. This makes it possible to achieve a flow that does not reverse at any point within the cage but instead all gas molecules are uninterruptedly approaching towards and into the thermal reaction zone and turbulences can be kept controlled. Consequently, the movement of the gas towards and into the thermal reaction zone without reversing away from the thermal reaction zone is secured.

Moreover,
a) the velocity of the gas can be controlled so that all gas volume heats equally fast, to avoid that no part of the cold gas advances too quickly and thus risks to cool down the reaction zone.
b)
   i) the wall of the vessel is protected from the heat of the thermal reaction zone, as no hot gas or plasma can leak out from the hot reaction zone thanks to non-reversing gas flow, and as the cage will reflect thermal irradiation from the reaction zone or plasma back into the reaction zone. This is particularly important for applications made for other pressures than atmospheric pressure, which is challenging for the mechanic stability of the vessel, particularly at high temperature.
   ii) the cage is protected from heat by colder gas continuously flowing around its outside and in through its holes and/or pores thus simultaneously cooling down the cage material while pre-heating the gas.
c) As the gas flow can be well controlled, the present disclosure further is beneficial for unsuitable residence time distribution of the gas in the reaction zone, that otherwise might lead to overheating or partly unreacted gas, or to the demand of a larger reactor volume to secure enough time for all gas to react.
d) by controlling the flow closest to the exit from the reactor, by-pass of unreacted gas beside the reaction zone can be minimized, that could otherwise lead to undesired dilution of the reaction products and a waste of heat to unreacted gas.

The thermal reaction zone is arranged inside the cage which acts as a reaction chamber. When in use, gas enters through the cage holes and continues further on into the thermal reaction zone. Upon entry of the gas through the holes of the cage surrounding the thermal reaction zone a pressure gradient is formed. The pressure gradient is defined as the difference between two pressures in corresponding points/volumes. By corresponding is meant that both points/volumes are situated at the same distance, d, from the cage wall on an imaginary straight line that is drawn from inside of the cage to outside of the cage, wherein the line is perpendicular to the surface of the cage wall. At the point/volume outside of the cage the at least first pressure P1 is determined and at the point/volume inside of the cage the at least second pressure P2 is determined. At every point on the cage wall along a similar imaginary perpendicular line, the pressure just outside of the cage is higher than the pressure just inside the cage at an infinitesimal distance from the cage wall. This pressure gradient gives rise to the transport of the gas through the cage wall.

The pressure gradient controls the velocity of the gas towards the thermal reaction zone, causing the gas to become less turbulent and more uniform in speed, which in turn secures the movement of the gas into the thermal reaction zone without reversing as well as improving the residence time distribution of the gas in the thermal reaction zone. Thereby dilution of the thermal reaction zone with fast by-passing unreacted cold gas is typically reduced or avoided. Influence on the thermal reaction zone of turbulence occurring in the immediate vicinity of the holes of the cage can be avoided by applying a sufficient size of the cage for the turbulence to disappear or sufficiently damp off before reaching the thermal reaction zone. In addition to the pressure gradient, when the gas enters through the holes of the cage, the cooler incoming gas will protect the walls of the vessel as well as the cage from the hot thermal reaction zone. The cage will also protect the vessel from part of the irradiation, both heat and electromagnetic, from the thermal reaction zone, by completely or partially reflecting the radiation back into the thermal reaction zone.

The cage can be of different shapes wherein non-limiting examples of the shape includes spherical, half-spherical, ellipsoid, cylindrical, rectangular, quadratic, cone, pyramid or polygonal prisms. Typically, the cage a central longitudinal axis around which the cage is symmetrical.

The corners of the cage may be angled or rounded or may have another three-dimensional form. Preferably, the corners are rounded and there are no sharp corners or edges. A preferred shape is an ellipsoid. Another preferred shape is a combination of ellipsoids and cylinders or cones into rounded forms where the joints between the different geometries are smooth without any edges or corners. Preferably, the three-dimensional derivative of the surface of the cage can be described by a continuous function, thereby the surface is smooth without any sharp edges. Such geometry is beneficial as there are no edges wherein gas would be delayed or allowed to create turbulences with the consequences that that the residence time distribution would be impaired and making it more difficult to control a gas flow in a controlled way. Preferably, also the second derivative of the continuous function is a continuous function meaning that the gas flow will not be interfered by differences in flow pattern from cage-walls with different geometries.

The cage may comprise an opening being larger than a hole on at least one side. Such opening is in such case typically arranged so that reaction products exiting the thermal reaction zone can be transported to the outlet of the vessel through the opening.

Preferably, at least 80% of the holes, such as at least 90% of the holes, have a central axis (Y) that is angled at an angle α being between 80°-100° relative to a tangential plane (X) at an outer surface of the cage around respective hole. By having such angle, the holes are substantially straight compared with the outer surface at each hole. Substantially straight holes minimize the rotation of the gas on the inside of the cage by causing as little as possible of an angular momentum. This is beneficial as to have as little by-pass of gas as possible, i.e. avoiding that the gas is transported along the inner walls of the cage instead of into the thermal reaction zone.

Typically, at least 30%, such as at least 40%, such as at least 50%, such as at least 60%, such as at least 70%, such as at least 80%, such as at least 90%, of the surface of the cage is provided with holes. That the surface is provided with holes means that there are holes distributed over that section of the surface. The entire surface, i.e. 100 %, of the cage may be provided with holes. If the surface is covered to 100 % by holes this means that there are no sections of the surface of the cage that does not have holes. Preferably, the distance between the holes is less than 10 cm, such as less than 5 cm, such as less than 3 cm, such as less than 5 mm. The cage is typically provided with at least 20 holes. It is beneficial to have a tight distance between the holes so that the flow on the inside of the cage is more homogenous with only minor rotations after passing the holes into the cage. The velocity of the flow is decreased by an even distribution of holes and a decreased velocity means that Reynold's number is decreased, which is beneficial as it minimizes turbulence.

The thermal reactor is a plasma reactor, the thermal reaction zone is a plasma zone and the temperature generating means are typically plasma generating means.

Typically, the vessel is a pressurized vessel. Pressurized refers to a pressure deviating from atmospheric pressure, the pressure is preferably above atmospheric pressure.

The cage is spaced from the walls of the vessel. As a consequence, the walls of the vessel are protected from the heat of the thermal reaction zone both by the gas barrier present between the walls of the vessel and the cage as well as by the gas barrier present between the cage and the thermal reaction zone. The cage can be spaced from all walls or parts of the walls, such as from all walls except the wall comprising the outlet of the vessel.

The temperature generating means are arranged to create a thermal reaction zone within the vessel and are typically arranged to create a localized thermal reaction zone, for example by focusing irradiation or discharge energy to a specific point or area or volume.

In one embodiment, the temperature generating means are electrodes. The electrodes can produce a thermal reaction zone, such as a plasma, through electric discharges. The electrodes are typically positioned inside or in direct vicinity of the thermal reaction zone.

In another embodiment, the temperature generating means are antennas. Typically, the antennas are plasma antennas adapted for radiofrequency waves or microwaves. A plasma generated from electromagnetic waves of radio frequency or microwaves can be localized for example by focusing irradiation to a specific point or area or volume and can therefore be arbitrarily or preferably optimally positioned inside the cage. Typically, the antennas are positioned in the walls of the vessel. The antennas may also be positioned in the walls of the cage.

The vessel may further comprise cooling means. The cooling means may be adapted for liquid quenching, such as nozzles for spraying liquid, e.g. water. Alternatively, the cooling means may be adapted for gas quenching. The cooling means are typically arranged so that the flow of quenching liquid or quenching gas is directed towards the outlet of the vessel or further downstream. Preferably, the cooling means are arranged in the outlet or in direct connection to the outlet.

The cage may be made of a porous material. In such a case, the gas is forced through the pores to enter the thermal reaction zone. A porous cage having long pores having a high length to width ratio that even further reduces the turbulence of the gas causing the flow to become laminar or essentially laminar already upon entry into the cage.

The cage may be a mesh. A mesh is a continuous structure built up in such a way that it is provided with openings. An example of a mesh is expanded metal sheets, wherein multiple slits in a sheet are made followed by stretching the sheet. The stretching creates a diamond opening pattern. Another example of a mesh is a perforated metal sheet that is made from sheet steel that has been fed through a machine that punches out holes that can be straight rows or staggered to increase the amount of the openings. A further example of a mesh is welded wire mesh comprising grids of parallel longitudinal wires being welded to cross wires at the required spacing. Yet another example of a mesh is a woven wire mesh that is made as a cloth with wire threads woven lengthwise and perpendicular at certain angles.

The cage may be made of a material that is transparent or almost transparent to radio- and microwave-frequency electromagnetic waves and thus does not interact with radio frequency (RF) waves or microwaves, to avoid reflections and absorption, in order to suit operation with longer wavelengths. Typically, in such a case, the cage is a ceramic cage made from a ceramic material, such as alumina (Al₂O₃) or alumina-based ceramics, corundum or fused quartz or borosilicate glasses, SiO2, boron nitride, silicon nitride or other silica ceramics or ZrO2 or other zirconia ceramics. The thermal generating means can in such a case be positioned outside of the cage, preferably in or on one or more of the wall(s) of the vessel.

Alternatively, the cage is a metal cage. The cage can be made of metal or be coated with metal or contain parts of metal, such as threads of metal. The metal cage or metal-coated cage may reflect heat irradiation back towards the thermal reaction zone. A metal cage typically creates a Faraday cage that causes the electromagnetic waves to reflect inside the cage and that enhances reflection of heat irradiation coming from the thermal reaction zone. Preferably, the openings of the Faraday cage have small dimensions to avoid or minimize electromagnetic leakage. The cage is preferably made of a conductive metal or metal alloy. The temperature generating means, typically plasma generating means, are arranged to create a thermal reaction zone, typically a plasma zone, within the cage. The temperature generating means are typically positioned in at least one wall of the cage or inside the metal cage, preferably on a cage side wall.

Alternatively, the cage is made of a non-metallic conductive material, preferably from graphene or reduce graphene oxide or graphene-metal composites.

In one embodiment, the thermal reactor the gas permeable cage is a first gas permeable cage and the thermal reactor further comprises:
a second gas permeable cage, wherein
the holes of the first gas permeable cage are first holes, and
the second gas permeable cage is provided second holes, wherein
the second gas permeable cage is smaller than the second gas permeable cage, so that the second gas permeable cage is arranged inside the first gas permeable cage.

Preferably, the first and second holes of the first and second gas permeable cages are arranged offset so that the first and second holes are not aligned. In such embodiment, the holes of cages arranged in direct vicinity of each other are offset so that the incoming gas is forced in a non-straight motion entering the cage. It is beneficial that the holes are not aligned since this is causing the turbulent energy of the gas outside the cage to decrease more efficiently. Typically, the first gas permeable cage and the second gas permeable cage have the same geometrical shape. By same geometrical shape is meant that both gas permeable cages are ellipsoids, cylinders, cones or any other suitable shape for the cage.

It is beneficial to arrange a first gas permeable cage inside a second gas permeable cage since diffusivity is decreased and, consequently, also the turbulence of the gas entering into through the first and second gas permeable cage. In embodiments, there are at least three, such as at least four, such as at least five gas permeable cages arranged inside one another so that upon entry of the gas, the gas is forced in a in a zig-zag motion into the inside of the cages. A zig-zag motion effectively decreases turbulence of incoming gas.

The thermal reactor is suitable for use in gaseous reactions including but not limited to fuel conversion, removal of pollutants from gas streams, production of hydrogen gas and nitrogen-containing compounds.

The present disclosure will now be described hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of the invention, which is defined by the claims. Like numbers refer to like elements throughout the description.

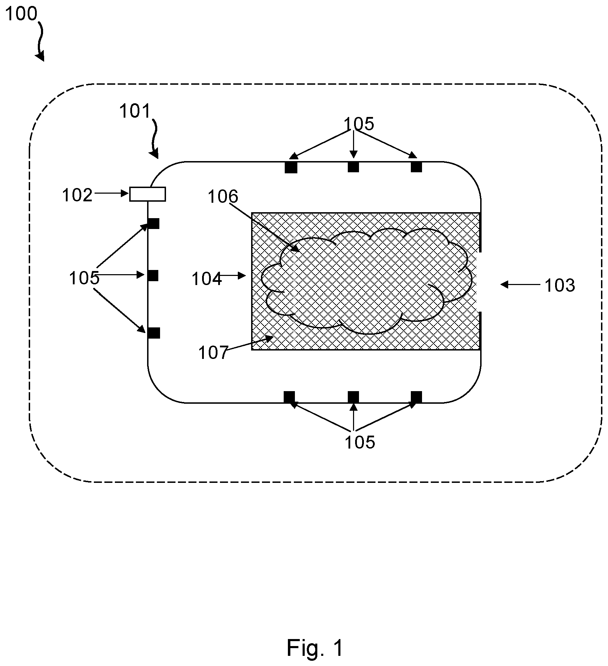

Fig 1 illustrates a schematic image of a cross section of a thermal reactor 100. The thermal reactor comprises a vessel 101 comprising a gas inlet 102, an outlet 103, a gas permeable cage 104 and temperature generating means 105 positioned in the vessel wall arranged to create a thermal reaction zone 106 within the cage 104.

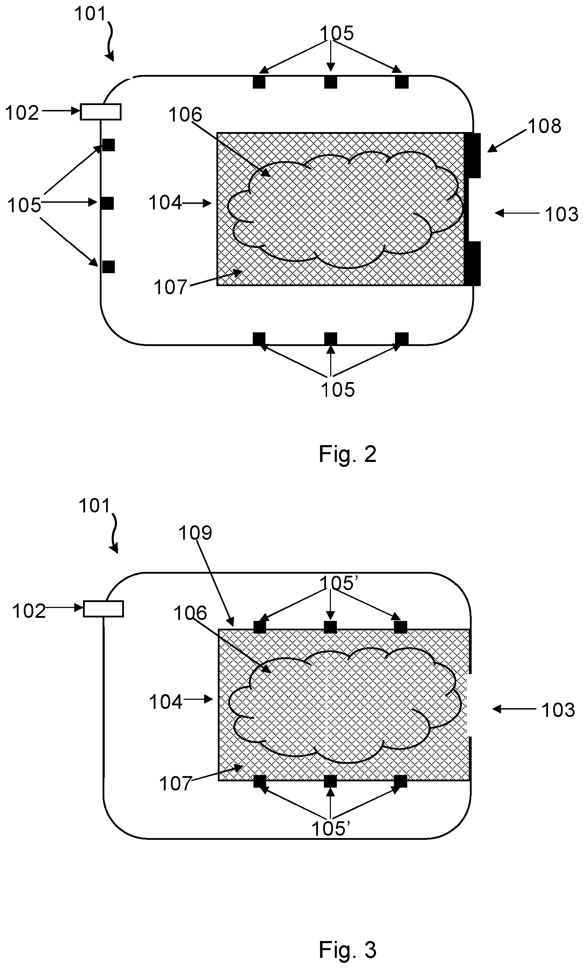

With reference to Fig 2 illustrating a cross section of an embodiment of the present disclosure, the vessel 101 is further provided with cooling means 108 arranged to cool the reacted products exiting the thermal reaction zone.

With reference to Fig 3 illustrating a cross section of an embodiment of the present disclosure, the temperature generating means 105' are arranged in the cage wall or inside the cage.

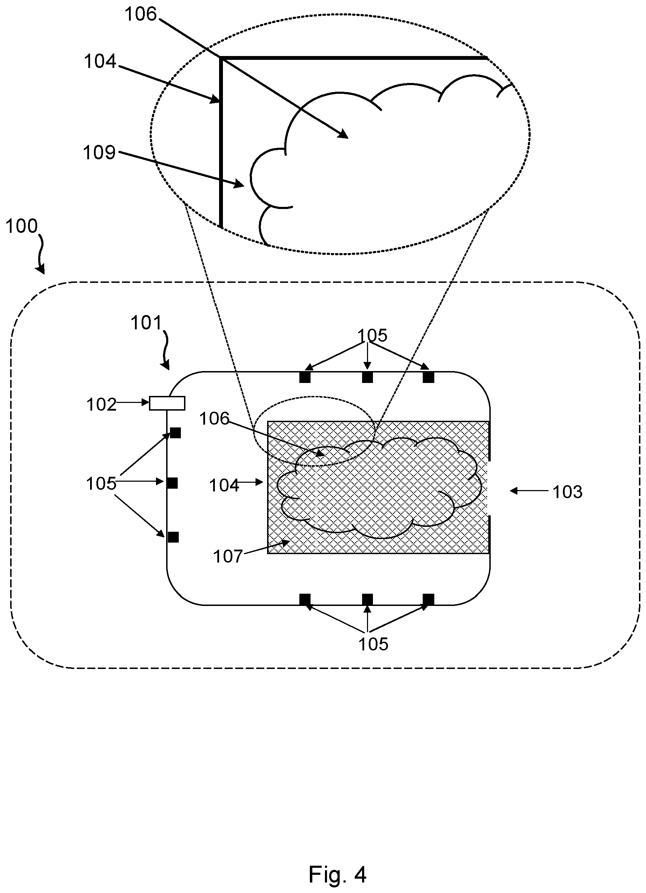

With reference to Fig 4, a cross section of a zoom-in portion of a part of the cage 104 is illustrating the thermal reaction zone 106 not being in contact with the cage 104 and a gap 109 between the thermal reaction zone 106 and the cage 104.

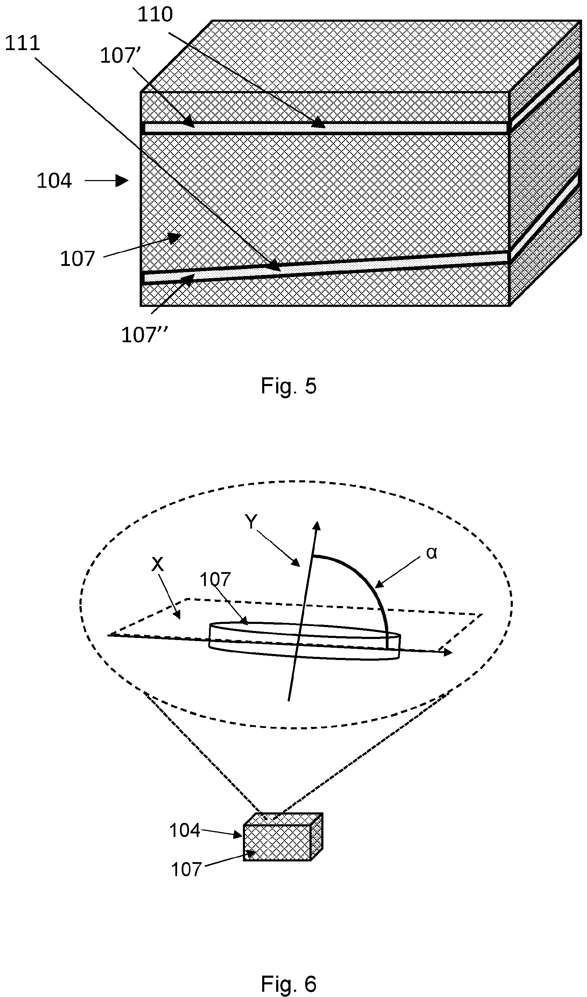

With reference to Fig 5, a schematic image of the cage 104 having holes 107 is shown illustrating exemplary first circumferential surface 110 and second circumferential surface 111. A first subset of the holes 107' is arranged along at least a portion of the first circumferential surface 110 of the cage 104 and a second subset of the holes 107" is arranged along at least a portion of the second circumferential surface 111 of the cage 104. The first and second circumferential surfaces 110, 111 are offset and non-parallel, and the first subset of holes 107' and the second subset of holes 107" arranged along the first and second circumferential surfaces 110, 111 are mutually distinct.

With reference to Fig 6, a schematic image of the cage 104 is shown as well as an enlarged schematic image of a hole 107 of the cage, wherein there is an angle α between a central axis Y and a tangential plane X at an outer surface of the cage 104 around the hole 107. The closer the angle α is to 90°, the more aligned is the hole 107 with the surface of the cage 104, i.e. the hole is straighter into the cage. If the angle α is 90°, the hole is straight, i.e. tangentially aligned with the outer surface of the cage 104.

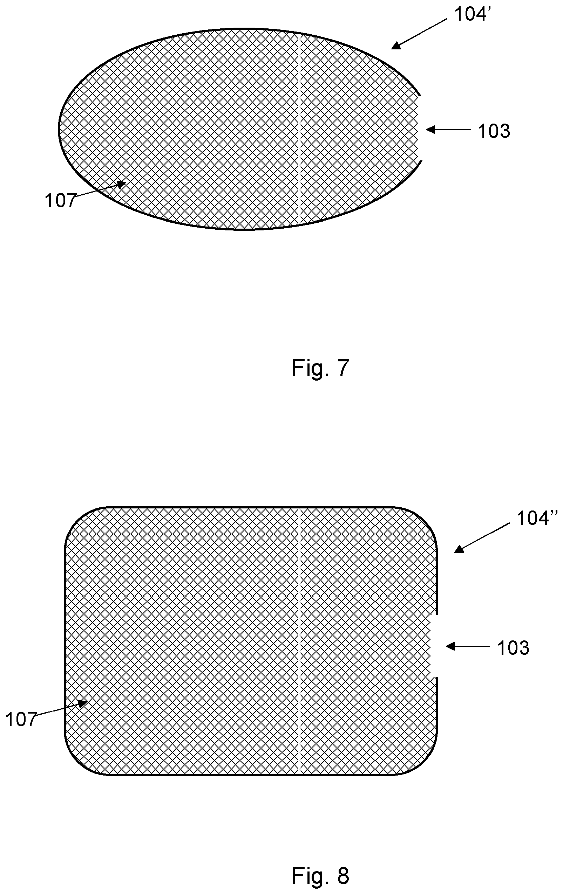

Fig 7 is a schematic image of a cross section of a preferred embodiment of the cage being an ellipsoid 104' having no sharp edges, i.e. the surface is described by a continuous function with continuous first- and second 3-dimensional derivatives (vector). The cage 104' has an outlet 103 and holes 107.

Fig 8 is a schematic image of cross section of a preferred embodiment of the cage being a cylinder 104" having no sharp edges, i.e. the surface is described by a continuous function with continuous first 3-dimensional derivative (vector). The cage 104" has an outlet 103 and holes 107.

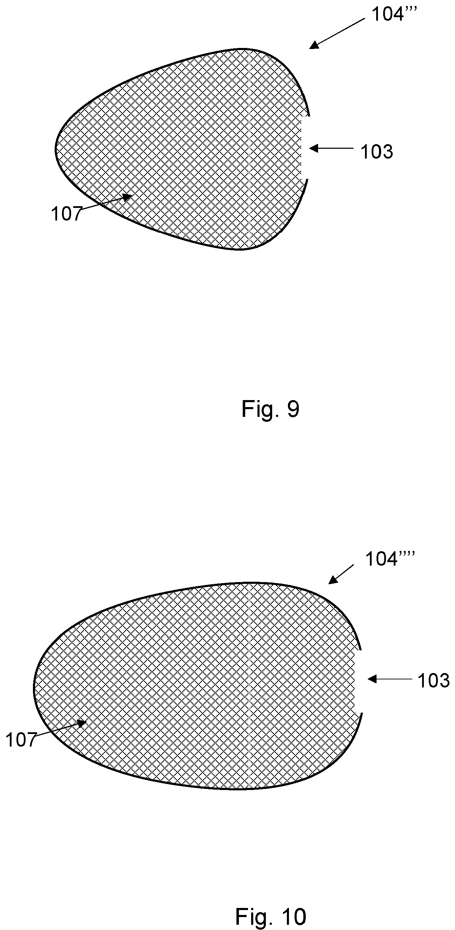

Fig 9 is a schematic image of a cross section of a preferred embodiment of the cage 104′‴ being two combined cut-off ellipsoids having no sharp edges and a smooth transition of the cut-off ellipsoids, i.e. the derivative of the continuous surface function is a continuous function. The cage 104‴ has an outlet 103 and holes 107.

Fig 10 is a schematic image of a cross section of a preferred embodiment of the cage 104"" being two cut-off ellipsoids combined with a cone, i.e. the derivative of the continuous function is a continuous surface function. The cage 104′‴ has an outlet 103 and holes 107.

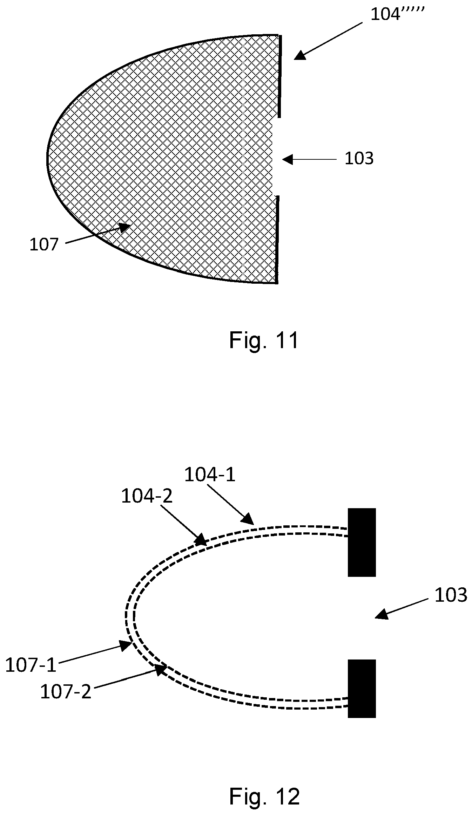

Fig 11 is a schematic image of a cross section of preferred embodiment of the cage 104‴ʺ being a cut-off ellipsoid. The cage 104‴ʺ has an outlet 103 and holes 107.

Fig 12 is a schematic image of a cross section of a second gas permeable cage 104-2 arranged inside a first gas permeable cage 104-1, wherein the first and second gas permeable cage (104-1, 104-2) have the same geometrical shape. The first gas permeable cage has holes 107-1 and the second gas permeable cage has holes 107-2. The cage 104-2 has an outlet 103.

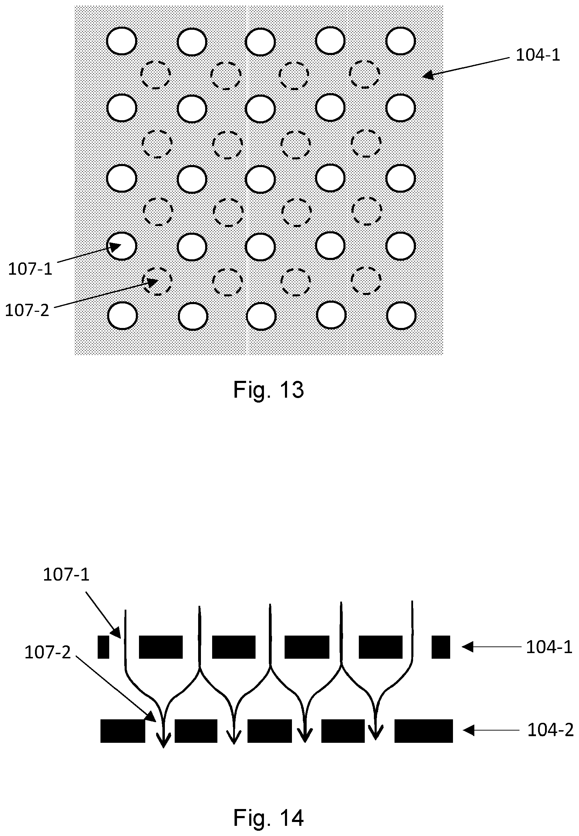

Fig 13 is a schematic front view of a second gas permeable cage (not shown) arranged inside a first gas permeable cage 104-1. The first gas permeable cage has holes 107-1 and second gas permeable cage has second holes 107-2, wherein the second holes 107-2 are dashed to illustrate the position of the holes 107-2 behind the surface of the first cage 104-1. The holes 107-1 and 107-2 are offset and not aligned.

Fig 14 is a schematic image of a zoomed-in cross section of a second gas permeable cage 104-2 arranged inside a first gas permeable cage 104-1, wherein the second gas permeable cage 104-2 has holes 107-2 and the first gas permeable cage 104-1 has holes 107-1.

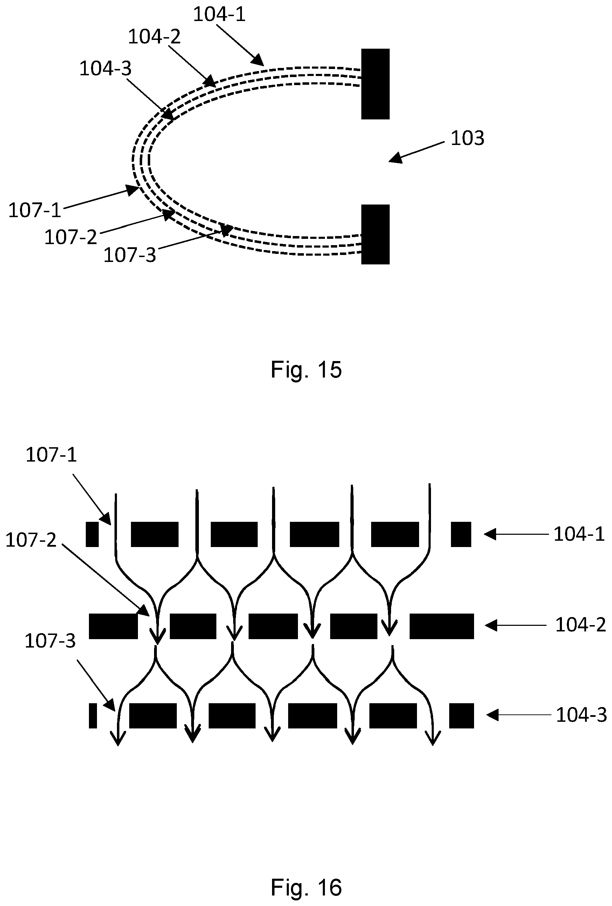

Fig 15 is a schematic image of a cross section of a third gas permeable cage 104-3 arranged inside a second gas permeable cage 104-2 arranged inside a first gas permeable cage 104-1, wherein the first, second and third gas permeable cage (104-1, 104-2, 104-3) have the same geometrical shape. The first gas permeable cage has holes 107-1, the second gas permeable cage has holes 107-2 and the third gas permeable cage has holes 107-3. The cage 104-3 has an outlet 103.

Fig 16 is a schematic image of a zoomed-in cross section of a third gas permeable cage 104-3 arranged inside a second gas permeable cage 104-2 arranged inside a first gas permeable cage 104-1. The third gas permeable cage 104-3 has holes 107-3, the second gas permeable cage 104-2 has holes 107-2 and the first gas permeable cage 104-1 has holes 107-1.

## Claims

1. A plasma reactor (100) comprising:
a vessel (101), said vessel comprising:
a gas inlet (102),
a gas permeable cage (104) arranged in the vessel (101), and in fluid connection to the gas inlet (102), wherein the vessel (101) and the cage (104) are provided with a mutual gas outlet (103), and
plasma generating means (105;105') arranged to create a plasma zone (106) within the cage (104),
wherein the cage (104) is provided with holes (107), and
wherein a first subset of the holes (107') is arranged along at least a portion of a first circumferential surface (110) of the cage (104) and a second subset of the holes (107") is arranged along at least a portion of a second circumferential surface (111) of the cage (104),
wherein the first (110) and second (111) circumferential surfaces are offset and non-parallel,
and the first subset of holes (107') and the second subset of holes (107") are mutually distinct, and
wherein the cage (104) is spaced from the walls of the vessel (101).

2. The plasma reactor according to claim 1, wherein the vessel (101) is a pressurized vessel arranged to operate at different pressure than atmospheric pressure, preferably a pressure being higher than atmospheric pressure.

3. The plasama reactor according to any one of claims 1-2, wherein the vessel (101) further comprises cooling means (108).

4. The plasma reactor according to claim 3, wherein the cooling means (108) are arranged in the outlet (103) or in direct connection to the outlet (103).

5. The plasma reactor according to any one of claims 1-4, wherein the cage (104) is a metal cage.

6. The plasma reactor according to any one of claims 1-4, wherein the cage (104) is a ceramic cage.

7. The plasma reactor according to any one of claims 1-4, wherein the cage (104) is made of a non-metallic conductive material, such as graphene or reduced graphene oxide or graphene-metal composites.

8. The plasma reactor according to any one of claims 1-7, wherein the temperature generating means (105; 105') are electrodes.

9. The plasma reactor according to any one of claims 1-7, wherein the temperature generating means (105; 105') are antennas.

10. The plasma reactor according to any one of the preceding claims, wherein the plasma reaction zone (106) is produced using electromagnetic waves of radio frequency or microwaves.

11. The plasma reactor according to any one of the preceding claims, wherein the cage (104) has a central longitudinal axis around which the cage (104) is symmetrical.

12. The plasma reactor according to any of the preceding claims, wherein the gas permeable cage (104) is a first gas permeable cage (104-1) and the plasma reactor further comprises:
a second gas permeable cage (104-2), wherein
the holes (107) of the first gas permeable cage (104-1) are first holes (107-1), and
the second gas permeable cage (104-2) is provided second holes (107-2), wherein
the second gas permeable cage (104-2) is smaller than the first gas permeable cage (104-1), so that the second gas permeable cage (104-2) is arranged inside the first gas permeable cage (104-1).

13. The plasma reactor according to claim 12, wherein the first and second holes (107-1, 107-2) of the first and second gas permeable cages (104-1, 104-2) are arranged offset so that the first and second holes (107-1, 107-2) are not aligned.

## Patentansprüche

1. Plasmareaktor (100), der umfasst:
einen Behälter (101), wobei der Behälter umfasst:
einen Gaseinlass (102),
einen gasdurchlässigen Käfig (104), der in dem Behälter (101) angeordnet ist und in einer Fluidverbindung mit dem Gaseinlass (102) steht, wobei der Behälter (101) und der Käfig (104) mit einem gegenseitigen Gasauslass (103) versehen sind, und
Plasmaerzeugungsmittel (105; 105'), die angeordnet sind, um eine Plasmazone (106) innerhalb des Käfigs (104) zu erzeugen,
wobei der Käfig (104) mit Löchern (107) versehen ist, und
wobei eine erste Teilmenge der Löcher (107') mindestens entlang einem Abschnitts einer ersten Umfangsfläche (110) des Käfigs (104) angeordnet ist, und eine zweite Teilmenge der Löcher (107") mindestens entlang einem Abschnitts einer zweiten Umfangsfläche (111) des Käfigs (104) angeordnet ist,
wobei die erste (110) und die zweite Umfangsfläche (111) versetzt und nicht parallel sind,
und wobei sich die erste Teilmenge der Löcher (107') und die zweite Teilmenge der Löcher (107") gegenseitig voneinander unterscheiden, und
wobei der Käfig (104) von den Wänden des Behälters (101) beabstandet angeordnet ist

2. Plasmareaktor nach Anspruch 1, wobei der Behälter (101) ein Druckbehälter ist, der angeordnet ist, um bei einem anderen Druck als bei dem Umgebungsdruck, vorzugsweise bei einem Druck, der höher als der Umgebungsdruck ist, betrieben zu werden.

3. Plasmareaktor nach einem der Ansprüche 1-2, wobei der Behälter (101) ferner Kühlmittel (108) umfasst.

4. Plasmareaktor nach Anspruch 3, wobei die Kühlmittel (108) in dem Auslass (103) oder in direkter Verbindung zu dem Auslass (103) angeordnet sind.

5. Plasmareaktor nach einem der Ansprüche 1-4, wobei der Käfig (104) ein Metallkäfig ist.

6. Plasmareaktor nach einem der Ansprüche 1-4, wobei der Käfig (104) ein Keramikkäfig ist.

7. Plasmareaktor nach einem der Ansprüche 1-4, wobei der Käfig (104) aus einem nicht-metallischen, leitfähigen Material wie etwa Graphen oder reduziertes Graphenoxid oder aus Graphen-Metall-Verbundwerkstoffen hergestellt ist.

8. Plasmareaktor nach einem der Ansprüche 1-7, wobei die Mittel (105; 105'), die die Temperatur erzeugen, Elektroden sind.

9. Plasmareaktor nach einem der Ansprüche 1-7, wobei die Mittel (105; 105'), die die Temperatur erzeugen, Antennen sind.

10. Plasmareaktor nach einem der vorhergehenden Ansprüche, wobei die Plasmareaktionszone (106) hergestellt wird, indem elektromagnetische Wellen mit Hochfrequenz oder Mikrowellen verwendet werden.

11. Plasmareaktor nach einem der vorhergehenden Ansprüche, wobei der Käfig (104) eine mittlere Längsachse aufweist, um die herum der Käfig (104) symmetrisch angeordnet ist.

12. Plasmareaktor nach einem der vorhergehenden Ansprüche, wobei der gasdurchlässige Käfig (104) ein erster gasdurchlässigen Käfig (104-1) ist, und wobei der Plasmareaktor ferner umfasst:
einen zweiten gasdurchlässigen Käfig (104-2), wobei
die Löcher (107) des ersten gasdurchlässigen Käfigs (104-1) erste Löcher (107-1) sind, und
der zweite gasdurchlässige Käfig (104-2) mit zweiten Löchern (107-2) versehen ist, wobei
der zweite gasdurchlässige Käfig (104-2) kleiner als der erste gasdurchlässige Käfigs (104-1) ist, so dass der zweite gasdurchlässige Käfig (104-2) innerhalb des ersten gasdurchlässigen Käfigs (104-1) angeordnet ist.

13. Plasmareaktor nach Anspruch 12, wobei die ersten und zweiten Löcher (107-1, 107-2) des ersten und zweiten gasdurchlässigen Käfigs (104-1, 104-2) versetzt angeordnet sind, so dass die ersten und zweiten Löcher (107-1, 107-2) nicht aufeinander ausgerichtet sind.

## Revendications

1. Réacteur à plasma (100) comprenant :
une cuve (101), ladite cuve comprenant :
une entrée de gaz (102),
une cage perméable au gaz (104) disposée dans la cuve (101) et en communication fluidique avec l'entrée de gaz (102), dans lequel la cuve (101) et la cage (104) sont pourvues d'une sortie de gaz commune (103), et
des moyens de génération de plasma (105 ; 105') agencés pour créer une zone de plasma (106) située à l'intérieur de la cage (104),
dans lequel la cage (104) est pourvue de trous (107), et
dans lequel un premier sous-ensemble des trous (107') est disposé le long d'au moins une partie d'une première surface circonférentielle (110) de la cage (104) et un deuxième sous-ensemble des trous (107") est disposé le long d'au moins une partie d'une deuxième surface circonférentielle (111) de la cage (104),
dans lequel les première (110) et deuxième (111) surfaces circonférentielles sont décalées et non parallèles,
et le premier sous-ensemble de trous (107') et le deuxième sous-ensemble de trous (107") sont mutuellement distincts, et
dans lequel la cage (104) est espacée des parois de la cuve (101).

2. Réacteur à plasma selon la revendication 1, dans lequel la cuve (101) est une cuve sous pression disposée pour fonctionner à une pression différente de la pression atmosphérique, de préférence à une pression supérieure à la pression atmosphérique.

3. Réacteur à plasma selon l'une quelconque des revendications 1 à 2, dans lequel la cuve (101) comprend en outre des moyens de refroidissement (108).

4. Réacteur à plasma selon la revendication 3, dans lequel les moyens de refroidissement (108) sont disposés dans la sortie (103) ou en liaison directe avec la sortie (103).

5. Réacteur à plasma selon l'une quelconque des revendications 1 à 4, dans lequel la cage (104) est une cage métallique.

6. Réacteur à plasma selon l'une quelconque des revendications 1 à 4, dans lequel la cage (104) est une cage en céramique.

7. Réacteur à plasma selon l'une quelconque des revendications 1 à 4, dans lequel la cage (104) est constituée d'un matériau conducteur non métallique, tel que le graphène, l'oxyde de graphène réduit ou des composites graphène-métal.

8. Réacteur à plasma selon l'une quelconque des revendications 1 à 7, dans lequel les moyens de génération de température (105 ; 105') sont des électrodes.

9. Réacteur à plasma selon l'une quelconque des revendications 1 à 7, dans lequel les moyens de génération de température (105 ; 105') sont des antennes.

10. Réacteur à plasma selon l'une quelconque des revendications précédentes, dans lequel la zone de réaction du plasma (106) est produite à l'aide d'ondes électromagnétiques de radiofréquence ou de micro-ondes.

11. Réacteur à plasma selon l'une quelconque des revendications précédentes, dans lequel la cage (104) présente un axe longitudinal central autour duquel la cage (104) est symétrique.

12. Réacteur à plasma selon l'une quelconque des revendications précédentes, dans lequel la cage perméable aux gaz (104) est une première cage perméable aux gaz (104-1) et le réacteur à plasma comprend en outre :
une deuxième cage perméable aux gaz (104-2), dans lequel
les trous (107) de la première cage perméable aux gaz (104-1) sont des premiers trous (107-1), et
la deuxième cage perméable aux gaz (104-2) est pourvue de deuxièmes trous (107-2), dans lequel
la deuxième cage perméable aux gaz (104-2) est plus petite que la première cage perméable aux gaz (104-1), de sorte que la deuxième cage perméable aux gaz (104-2) est disposée à l'intérieur de la première cage perméable aux gaz (104-1).

13. Réacteur à plasma selon la revendication 12, dans lequel les premier et deuxième trous (107-1, 107-2) des première et deuxième cages perméables aux gaz (104-1, 104-2) sont disposés de manière décalée de sorte que les premier et deuxième trous (107-1, 107-2) ne soient pas alignés.
